# EUROPÄISCHE PATENTANMELDUNG

(11) **EP 2 295 894 A2**
(43) Veröffentlichungstag der Anmeldung: **16.03.2011**
(21) Anmeldenummer: 10170655.4
(22) Anmeldetag: 23.07.2010
(51) Int. Cl.: F24J 2/52, H01L 31/048

(54) **Anordnung zur Befestigung von Modulen einer Photovoltaik-Einrichtung oder von Solarpaneelen**

(30) Priorität: 30.07.2009 DE 202009005090 U
(71) Anmelder: Schöne, Vera, 33415 Verl (DE)
(72) Erfinder: Schöne, Vera, 33415 Verl (DE)
(74) Vertreter: Strauss, Hans-Jochen

(57) **Zusammenfassung**

Um für eine Anordnung zur Befestigung von Modulen (2) einer PhotovoltaikAnlage oder von Solarpaneelen an einer auf einer Dachfläche (3, 3') befestigten Unterkonstruktion (4, 4'), an der ein Unterprofil (10) und an dem Modul (2) ein Gegenprofil (20) vorgesehen sind, die beide formschlüssig miteinander verbindbar sind, das technische Problem einer Verbesserung vorzuschlagen, die eine montagefreundliche Handhabung auf der Dachfläche ermöglicht. Dazu zur Halterung des Moduls (2) an der Unterkonstruktion (4, 4') ein am Gegenprofil (20) vorgesehenes Stegelement (25; 25'), das in eine Stegtasche (18) am Unterprofil (10) und diese zumindest höhenmäßig mit Formschluss füllend einführbar und in dieser Verbindung mittels einer in eine Federtaschen (16) am Unterprofil (10) mit einem inneren Federbereich (31) einführbare Feder (30; 30') als Sperrmittel an der Unterkonstruktion (4) anklipsbar ist, vorgesehen ist, wobei Federtasche (16) und Stegtasche (18) parallel zueinander und im Abstand voneinander und vorzugsweise beidseits angeordnet sind.

## Beschreibung

### Technisches Umfeld

Die Erfindung betrifft eine Anordnung zur Befestigung von Modulen einer Photovoltaik-Anlage oder von Solarpaneelen an einer auf einer Dachfläche vorgesehenen Unterkonstruktion, die an der Dachfläche befestigt ist, wobei an dem Modul sowie an der Unterkonstruktion Profile zur Festlegung vorgesehen sind.

### Stand der Technik

Aus dem Stand der Technik sind Photovoltaik-Anlagen bekannt, die auf Dächern, wie beispielsweise Flachdächern oder Schrägdächern, angeordnet sind. Dabei werden auf der Dachkonstruktion Unterkonstruktionen vormontiert, auf die dann die Photovoltaik-Anlage bzw. das Solarpaneel aufgesetzt wird. An der Unterkonstruktion befinden sich hierzu Profilelemente, die wiederum mit an dem Solarpaneel vorgesehenen Profilen an der Unterseite oder die an den Seitenbereichen des Paneels angeordnet sind, derart zusammenwirken, dass sie entweder verschraubt oder verklebt werden. Bei dieser aus dem Stand der Technik bekannten Anordnung zur Befestigung von Modulen wird es als nachteilig angesehen, dass die Befestigung als solches sich aufwendig gestaltet, zumal bei den bekannten Anordnungen eine Verschraubung oder Verklemmung der Profileinheiten erfolgen muss.

### Aufgabe

Der Erfindung stellt sich somit das Problem eine Anordnung zur Befestigung von Modulen von Photovoltaik-Anlagen oder von Solarpaneelen dahingehend zu verbessern, dass eine montagefreundliche Handhabung auf der Dachfläche ermöglicht ist.

### Lösung

Erfindungsgemäß wird dieses Problem durch die unabhängigen Ansprüche gelöst, vorteilhafte Ausgestaltungen und bevorzugte Weiterbildungen der Erfindung ergeben sich aus den davon abhängigen Unteransprüchen.

Die Unterprofile weisen an deren Kammerprofile angeformte Stegprofile auf, die mit U-förmigen Einformungen als Stegkammern und Federkammern versehen sind. Beim Aufsetzen der Gegenprofile an die Unterprofile sind die an den Gegenprofilen angeordneten Stegelemente in diese Stegkammern einführbar und füllen die Stegkammern zumindest höhenmäßig formschlüssig aus.

Die aufgesetzten Gegenprofile sind mittels in die an den Unterprofilen vorgesehenen Federtaschen einführbare Sperrmittel festlegbar. Als Sperrmittel kann einer Sperrschraube vorgesehen sein. In diesem Fall ist die Federtasche als Schraubkanal ausgebildet, deren innere Wände längsverlaufende Riefen aufweisen, in den Sperrschrauben einschraubbar sind.

Vorteilhaft können als Sperrmittel auch Federn in die Federtasche eingesetzt werden. Jeder dieser Federn weist eine Federbasis auf, an ein etwa U-förmig zurück gebogener, als Zackenschenkel ausgebildeter Schenkel angeformt ist. Dieser liegt bei eingesetzten Federn als innere Federbereiche in den Federtaschen. Die gegen die Federbasis gerichtet Zacke des Zackenschenkels ist dabei von der Federbasis beabstandet. Die Höhe der Feder zwischen Federbasis und Sperrschenkel entspricht der Weite der Federkammer. Somit kann die Feder in die Federkammer eingesetzt werden. Das freie Ende dieses Zackenschenkels ist dabei gegen ein am Ende der Federkammer angeordnete Sperrkante abgestützt. So kann die Feder in die Federkammer eingesetzt werden und ist in dieser Lage gegen eine Entnahme gesichert. Ist die Feder leicht gespreizt, wird diese beim Einsetzen der Feder in die Federtasche etwas gespannt, was das Halten der Feder in der Federkammer mit ihrer eigenen elastischen Federspannung begünstigt. An das freie Ende der Federbasis ist ein Sperrschenkel angeformt, der mit seinem freien Ende bei aufgesetztem Gegenprofil und somit in die Stegtasche eingeschobenen Stegelements eine Sperrnase oder Sperrfläche hintergreift und so die Lage des Gegenprofils im Unterprofil sichert.

Diese Ausbildung ermöglicht es bei einer vormontierten Unterkonstruktion auf dem Dach, dass das Modul in einfacher Weise an das Profil der Unterkonstruktion angesetzt und zur Bildung einer Formschlussverbindung in verriegelte Position geschoben und angeklipst werden kann. Infolge der Federwirkung wird ein Selbsthalten des Moduls an der Unterkonstruktion erreicht. Dies erleichtert insbesondere die Montagearbeit auf dem Dach, da sie ohne Werkzeug erfolgen kann. Zu dem ergibt sich aufgrund dieser Ausbildung eine schnelle und sichere Festlegung der Einzelmodule an der vormontierten Unterkonstruktion.

Nach einer vorteilhaften Ausbildung der Erfindung ist das Gegenprofil unter Anlage an das Profil der Unterkonstruktion mit Formschluss verschiebbar ausgebildet, und bildet eingeschoben eine Formschlussverbindung, die durch Sperrmittel sperrbar ist. Somit wird erreicht, dass neben der die Sperrung des Gegenprofils an dem Unterprofil der Unterkonstruktion bewirkenden Sperrmittel, auch eine feste Formschlussverbindung zwischen den beiden Profilen hergestellt wird. Um ein kontrolliertes Einschieben des Gegenprofils an das Unterprofil der Unterkonstruktion möglichst gezielt sicher zu gestalten, ist das Stegelement an dem Gegenprofil unter einer Schrägen angeformt. Beim Einschieben in die Stegtasche beim Herstellen der Formschlussverbindung drückt das Stegelement das freie Ende des über die Federtasche hinausragenden Federbereichs nieder. Ist das freie Ende des Federbereichs im eingeschobenen Zustand des Stegelementes wieder frei, springt es hinter eine angeformte Stegwand des Stegelementes zur Sicherung zurück, um ein selbsttätiges Zurückschieben des Gegenprofils zu verhindern.

Bei der ersten Ausführungsform weist das freie Ende des Federbereichs ein unter einem spitzen Winkel geformten Umbug als keilförmigen Bereich auf, der beim Einschieben des Stegelementes mit dessen Nase zusammenwirkt. Aufgrund dieser Ausbildung wird erreicht, dass das Stegelement und der keilförmig ausgebildete Federbereich derart zusammenwirken, dass das freie Ende des äußeren Federbereichs bei dem gegeneinander Verschieben dieser beiden in den Freiraum gedrückt wird.

Bei der zweiten Ausführungsform ist das freie Ende des Federbereichs als abgewinkelte Nase ausgebildet, die beim Einschieben des Stegelementes mit einer an das Stegelement unter einem spitzen Winkel angeformten keilförmigen

Schrägfläche derart zusammenwirken, dass das freie Ende des äußeren Federbereichs bei dem gegeneinander Verschieben dieser beiden nieder gedrückt wird. Dabei versteht es sich von selbst, dass für ein ordnungsgemäßes Verklipsen und für einen sicheren Formschluss die Ausbildung des inneren sowie des äußeren Federbereichs und der Federtasche sowie des Stegelements und der Stegtasche aufeinander abgestimmt sind.

Das Stegelement läuft in eine etwa rechtwinklig liegende Fortsetzung aus, deren Nasenkante mit dem keilförmigen Umbug der Feder zusammenwirkt, der beim Einschieben des Federelements in die Federtasche gleitet. Dabei läuft die Nasenkante auf die Schrägfläche des keilförmigen Umbugs auf und bewirkt das Niederdrücken der Feder. Nach Beendigung des Schiebevorganges ist der eingeschobene Zustand hergestellt und die Feder springt - analog zur ersten Ausführungsform - ebenfalls zurück und der Sperrschenkel greift sperrend hinter die Stegwand und die Feder sperrt in dieser Position ein weiteres Verschieben, insbesondere ein Zurückschieben des Gegenprofils gegenüber dem Unterprofil. Beim Einschieben des Stegelementes in die Stegtasche wirkt dieses mit der freien Kante des Umbugs der Feder erster Ausführungsform oder mit der Schrägfläche eines keilförmig ausgeformten Bereichs der Feder zweiter Ausführungsform zum Niederdrücken zusammen.

Als Unterkonstruktion eigenen sich dabei sowohl Schienen mit Abstandsstützen wie auch Dachhaken, wobei ersteres auch ein Anordnen von Modulen auf Flachdächern ermöglichen. Das auf der Unterkonstruktion angeordnete Unterprofil umfasst hierbei ein Kastenprofil, unter dessen oberer Wand die übereinander liegenden zwei Taschen in Form von U-förmigen Nuten als Federtasche und als Stegtasche angeformt sind, wobei jeweils an den Seitenwänden und an der unteren Wand des Kastenprofils U-förmige Einformungen vorgesehen sind, die zur Festlegung des Kastenprofils an auf dem Dach festgelegten Halterungen bestimmt sind. Diese Ausbildung des Unterprofils ermöglicht es nun, dieses nicht nur von unten her, sondern auch von den Seitenwänden her an der Unterkonstruktion festzulegen.

Das Unterprofil ist dabei als Kastenprofil ausgebildet ist, an dessen oberer Wand die übereinander liegenden Feder- bzw. Stegtaschen in Form von U-förmigen Nuten angeformt sind. Dabei sind jeweils an den Seitenwänden und an der unteren Wand des Kastenprofils U-förmige Einformungen vorgesehen. Zur Festlegung des Unterprofils dienen auf dem Dach oder der Unterkonstruktion festlegbare Halterungen.

Nach einer zweckmäßigen Ausgestaltung weist das Gegenprofil eine Hut-Form mit U-förmigem Mittelteil mit einem Basisschenkel und seitliche Schenkel auf, wobei diese freien Seitenschenkel des U's um 90° zur Bildung von Auflageschenkel mit Haftflächen an der Unterseite des Moduls abgebogen sind, an der die Module in der üblichen Weise fest gelegt sind. An den Basisschenkel des Gegenprofils insbesondere in Verlängerung des einen der seitlichen Schenkel das vorzugsweise schräg zum Basisschenkel ausgerichtete Stegelement mit Stegwand angeformt ist. Dabei ist dieses Stegelement vorzugsweise schräg zum Basisschenkel ausgerichtet. In zweckmäßiger Weiterbildung bildet hierbei die Außenseite des Basisschenkels des Gegenprofils Ansatz- und Schiebefläche zum Aufschieben auf die Schiebefläche an der Oberseite des Unterprofils, um das Verklipsen zu erreichen Damit erfährt die Montagearbeit auf dem Dach die gewünschte Erleichterung.

### Beschreibung der Zeichnungen

In den Zeichnungen sind zwei Ausführungsbeispiele der Erfindung rein schematisch dargestellt, die nachfolgend näher beschrieben werden. Es zeigt:
- Fig. 1:: Anordnung zur Befestigung von Modulen einer Photovoltaik- Anlage oder eines Solarpaneels mit einer Unterkonstruktion auf einem Flachdach mit Unterprofil, Gegenprofil und Feder (schematische Seitansicht);
- Fig. 2:: Anordnung zur Befestigung von Modulen einer Photovoltaik- Anlage oder eines Solarpaneels mit Dachhaken auf dem Dachstuhl eines Schrägdaches mit Unterprofil, Gegenprofil und Feder (schematische Seitansicht);
- Fig. 3:: Anordnung zur Befestigung von Modulen einer Photovoltaik- Anlage oder eines Solarpaneels mit Stegelement und Feder in erster Ausführungsform (Seitansicht);
- Fig. 4:: Abfolge des Zusammenfügens von Unterprofil und Gegen- profil nach Figur 3 in den Figur 4a, 4b, 4c und 4d (schema- tisch);
- Fig. 5:: Anordnung zur Befestigung von Modulen einer Photovoltaik- Anlage oder eines Solarpaneels auf Flachdach mit Stegele- ment und Feder in zweiter Ausführungsform (Seitansicht);
- Fig. 6:: Abfolge des Zusammenfügens von Unterprofil und Gegen- profil nach Fig. 5 in den Figur 6a, 6b, 6c und 6d (schema- tisch):
- Fig. 7:: Einzelheiten Feder erste Ausführungsform (Fig. 7a), zweite Ausführungsform (Fig. 7b).

### Ausführungsbeispiele

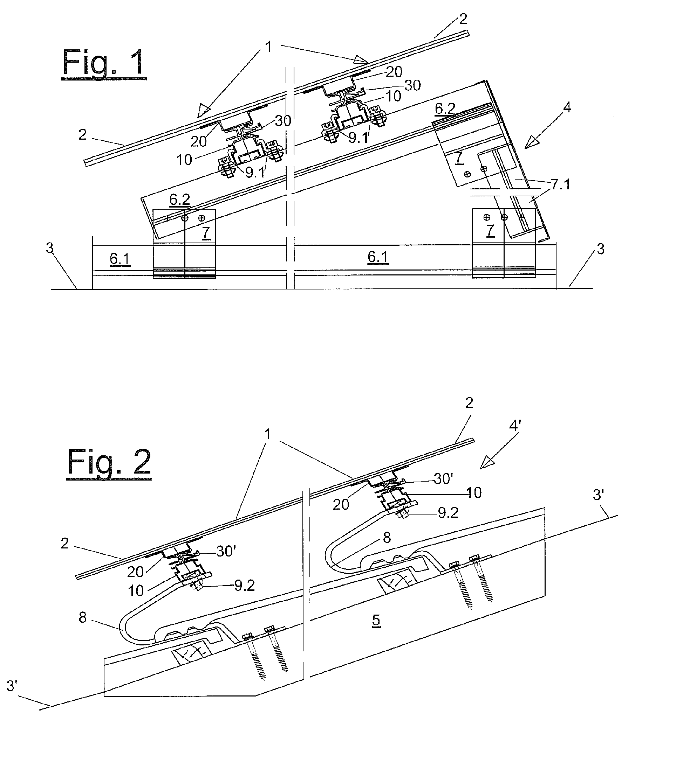

Die Figuren 1 und 2 zeigen jeweils in Seitenansicht zwei Varianten einer Photovoltaic-Anordnung 1 zur Befestigung von Modulen 2, wie sie beispielsweise bei Photovoltaik-Anlagen verwendet werden. Das Modul 2 kann hier beispielsweise auch ein Solarpaneel sein.

Dabei zeigt die Figur 1 eine Ausführungsform, die auf Flachdächern Verwendung findet, wobei die aus den Schienen 6.1 und Tragprofil 6.2 sowie den Stützen 7 gebildete Unterkonstruktion 4 eine Schrägstellung zur Dachfläche 3 ermöglicht und an denen die die Module 2 tragenden Tragprofile 6.2 angeordnet sind. Zum Einstellen der notwendigen Schräglage der Tragprofile 6.2 und somit der Module 2 sind auf deren höhere zu stellenden Seite die Stützen 7 doppelt vorgesehen. Mittels der Zwischenstücke 7.1 ist dann die vorgesehen Winkellage entsprechende Höhe einstellbar. Zur Festlegung der Unterprofile 10 an den Tragprofilen 6.2 sind Profilhalter 9.1 vorgesehen, die in die an den Seitenwänden 14 des Kastenprofils 10 vorgesehene Nuten 14.1 eingreifend die Unterprofile 10 sicher an der Unterkonstruktion 4 halten.

Die Figur 2 zeigt die Anordnung von Module 2 auf einen ein Schrägdach, dessen Dachfläche 3' mit (nicht näher bezeichneter) üblicher Dachdeckung abgedeckt ist. Die in Parallellage zur Dachfläche 3' angeordneten Module 2 sind hier auf einer Unterkonstruktion 4' montiert, die von Dachhaken 8 gebildeten ist. An diesen Dachhaken 8 sind die Unterprofile 10 mit Schrauben 9.2 angeschraubt, während die Dachhaken 8 ihrerseits sind bei dieser Ausführungsform mit (üblicher) Verschraubung mit den Sparren bzw. Pfetten 5 des Dachstuhles verschraubt sind.

Auf diese Unterprofile 10 sind die an der Unterseite der Module 2 vorgesehen Gegenprofile 20 aufgesetzt und mit den Federn 30 bzw. 30' festgelegt. Dabei wirken diese Federn 30 bzw. 30' mit an der Unterseite der Module 2 angeordneten Gegenprofilen 20 derart zusammen, dass die so ausgebildete Gegenprofile 20 zur Halterung der Module 2 an der Unterkonstruktion 4' an die Unterprofile 10 ansetzbar und unter Wirkung der Feder 30 bzw. 30' anklipsbar sind.

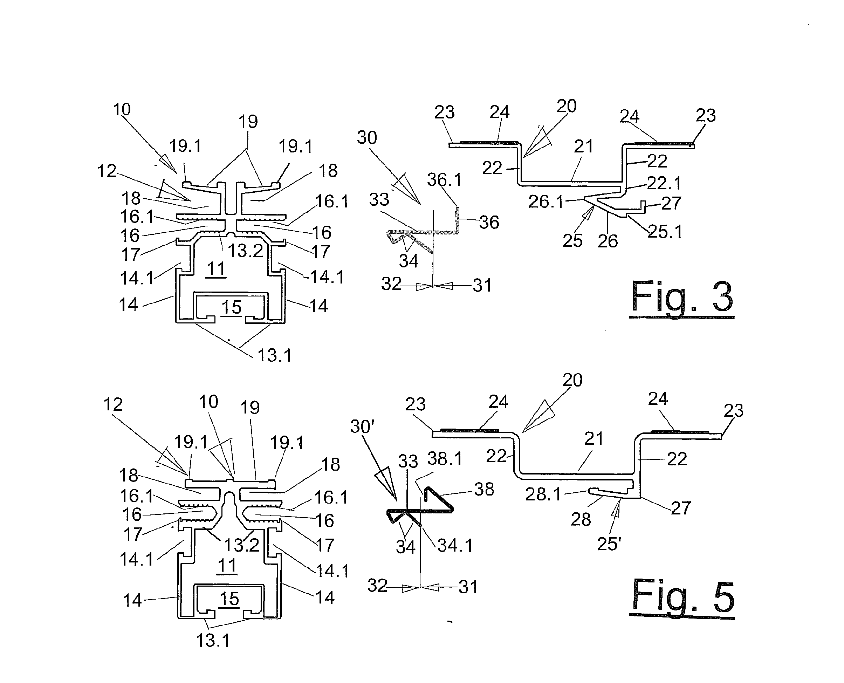

Die Figuren 3 und 5 zeigen das Unterprofil 10 mit dem Gegenprofil 20 sowie die Federn 30 bzw. 30' im Einzelnen. Das Unterprofil 10 weist ein Kastenprofil 11 mit einer unteren Wand 13.1, einer oberen Wand 13.2 und den das Kastenprofil 11 schließenden Seitenwänden 14 auf. Die untere Wand 13.1 mit einer Nut 15 mit Hinterschnitt versehen, in die zur direkten Befestigung der Unterprofile 10 an Dachhaken 8 eine (nicht näher eingezeichnete) Leiste zum Verschrauben über die Schraube 9.2 mit den Dachhaken 8 eingeführt werden kann. Die Seitenwände 14 des Unterprofils 10 weisen U-förmige Nuten 14.1 auf, die die hakenförmigen Enden Profilhaltern 9.1 aufnehmen, mit denen die Unterprofile 10 an Tragschienen 6.2 festlegbar sind.

Das Unterprofil 10 umfasst neben dem Kastenprofil 11 ein Stegprofil 12, das an die obere Wand 13.2 der Unterprofile 10 angeformt ist. Das freie Ende des an dieses Kastenprofil 11 angeformte Stegprofil 12 ist mit der Schiebefläche 19 versehen, an die zur Auflagerung der Module 2 auch Auflagenocken 19.1 vorgesehen sein können. Weiter ist das Stegprofil 12 mit übereinander liegenden Taschen, der Federtasche 16 und der Stegtaschen 18 versehen. Diese sind beidseits in Form von sich seitlich öffnenden U-förmigen Nuten angeformt.

Die nutförmigen Federtaschen 16 nehmen die Feder 30 bzw. 30' auf, während die nutförmigen Stegtaschen 18, die sich parallel zur und im Abstand über den Federtaschen 16 erstrecken, der Aufnahme der an das Gegenprofil 20 angeformten Stegelemente 25 bzw. 25' dienen. Dabei sind die Federtaschen 16 und die Stegtaschen 18 den unterschiedlichen Ausbildungsformen der Federn 30 bzw. 30' sowie der entsprechenden Stegelementen 25 bzw. 25' entsprechenden ausgeformt, um diese mit Formschluss aufnehmen zu können. Diese beidseitige Anordnung der Taschen 16 und 18 ermöglicht jeweils das Ansetzen des Gegenprofils 20 von der einen oder der anderen Seite her.

Das an das (in den folgenden Figuren nicht dargestellte) Modul 2 angeordnete Gegenprofil 20 ist im wesentliche hutförmig ausgebildet mit einer mit der Schiebefläche 19 bzw. den Auflagenocken 19.1 zusammenwirkenden Basisschenkel 21, an den sich beidseits voneinander beabstandet etwa um 90° rechtwinklig aufgebogene Seitenschenkel 22 anschließen. Von diesen Seitenschenkel 22 gehen die Auflageschenkel 23 aus, die im Wesentlichen parallel zu dem Basisschenkel 21 ausgerichtet sind, und die (in der gewählten Darstellung) zum Halten der Module 2 mit aufgebrachten Haftflächen 24 versehen sind, an denen das Gegenprofil 20 an der Unterseite des Moduls 2 festgelegt, insbesondere verklebt wird. An den Basisschenkel 21 ist das Stegelement 25 bzw. 25' angeformt, das beim Zusammenfügen von Unterprofil 10 und Gegenprofil mit den Stegtaschen 18 der Unterprofile 10 zusammenwirkt.

Beim Aufschieben des Gegenprofils 20 auf das Unterprofil 10 bildet der Basisschenkel 21 als solcher die Ansatz- und Schiebefläche, die mit der an dem Unterprofil 10 vorgesehenen, als Schiebefläche ausgebildeten Auflagefläche 19 bzw. der Auflagenocken 19.1 sperrend zusammenwirkt. Dabei ist das dem Zusammenwirken mit der Feder 30 der ersten Ausführungsform mit dem Stegelement 25 des Gegenprofils 20 an den Basisschenkel 21 des Gegenprofils 20 dienende Stegelement 25 als keilförmige Ausformung 26 mit Spitze 26.1 leicht schräg zum Basisschenkel 21 ausgerichtet an einen den seitlichen Schenkel 22 verlängernden Verlängerungssteg 22.1 angeformt. Für das Zusammenwirken mit der Feder 30' zweiter Ausführungsform ist an das Stegelement 25' ein den Verlängerungssteg 22.1 eine schräg zum Basisschenkel 21 liegende, auf diesen hingerichtete keilförmige Anformung 28 mit einer Nasenkante 28.1 vorgesehen, die beim Aufschieben des Gegenprofils 20 mit der Feder 30' zusammen wirkt.

Dazu weist die Feder 30 erster Ausführungsform eine Federbasis 33 auf, an deren eine Seite ein Umbug 36 angeformt ist, und deren andere Seite zu einem Zackenschenkel 34 zurückgebogen ist. Dieser Zackenschenkel 34 mit seinem Sperrschenkel 34.1 bildet den inneren Federbereich 32 der Feder 30, der eingesetzt in der Federkammer 16 liegt, während der Umbug 36 mit seiner Sperrkante 36.1 den äußeren Federbereich 31 bildet. Dieser Umbug 36 wirkt bei aufgeschobenem Gegenprofil 20 mit dessen Sperrkante 27 die Lage des Gegenprofils sichernd zusammen, wobei dieser die Sperrkante 27 hintergreift. Bei der Feder zweiter Ausführungsform 30' ist an die Federbasis 33 ein Umbug 38 mit einem Sperrschenkel 38.1 angeformt. Dieser Umbug 38 ist keilförmig im Winkel abgebogen und bildet den aus der Federtasche 16' austretenden äußeren Federbereich 31 der Feder 30', während der Zackenschenkel 34 in der Federkammer 16 liegend den inneren Federbereich 32 der Feder bildet. Hier wirkt der Umbug 38 mit dem als Sperrkante 27' wirkenden Verlängerungssteg 22.1, den dieser hintergreift, zur Sicherung der Lage des Gegenprofils zusammen.

Die in die Federtasche 16 einsetzbare Feder 30 bzw. 30' ist in zwei unterschiedlichen Ausführungsformen ausgeführt, an die die Ausbildung der Stegelemente 25 angepasst sind. Bei beiden Ausführungsformen liegt die Federbasis 33 an der der Stegkammer 18 zugewandten Seitenwandung 16.1 der Federkammer 16 an. Beide Ausführungsformen weisen dabei einen in der Federtasche 16 liegenden inneren Federbereich 32 und einem äußeren Federbereich 31 auf. Dieser innere Federbereich 31 der Federn 30 bzw. 30' ist bei beide Ausführungsformen im Wesentlichen gleich ausgebildet. Dabei schließt sich an eine Seite der Federbasis 33 der Zackenschenkel 34 an, dessen freies Ende als Sperrschenkel 34.1 im endgültig eingeschobenen Zustand des Gegenprofils 20 gegen eine am Ausgang der Federtasche 16 liegende Sperrkante 17 anliegt. Die Zacke der Zackenschenkel 34 drückt sich dabei gegen die an der Seitenwandung 16.1 anliegenden Federbasis 33. Dabei entspricht die auch gestufte Weite der Federtasche 16 der Höhe "H" des Zackenschenkels 34 so, dass das freie Ende des Sperrschenkels 34.1 gegen die der Wand 16.1 gegenüber liegende angedrückt und an der Sperrkante 17 zum Sichern der Lage der Feder 30 bzw. 30' abgestützt ist, wodurch das Anliegen der Federbasis 33 an der den Stegkammern 18 zugewandten Seite 16.1 der Federtaschen 16 bewirkt wird.

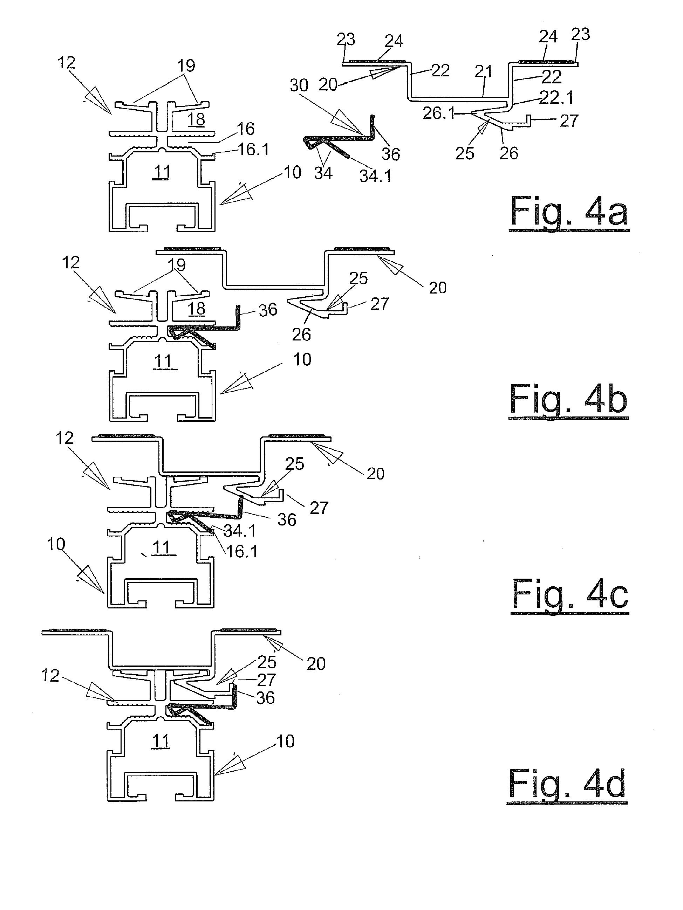

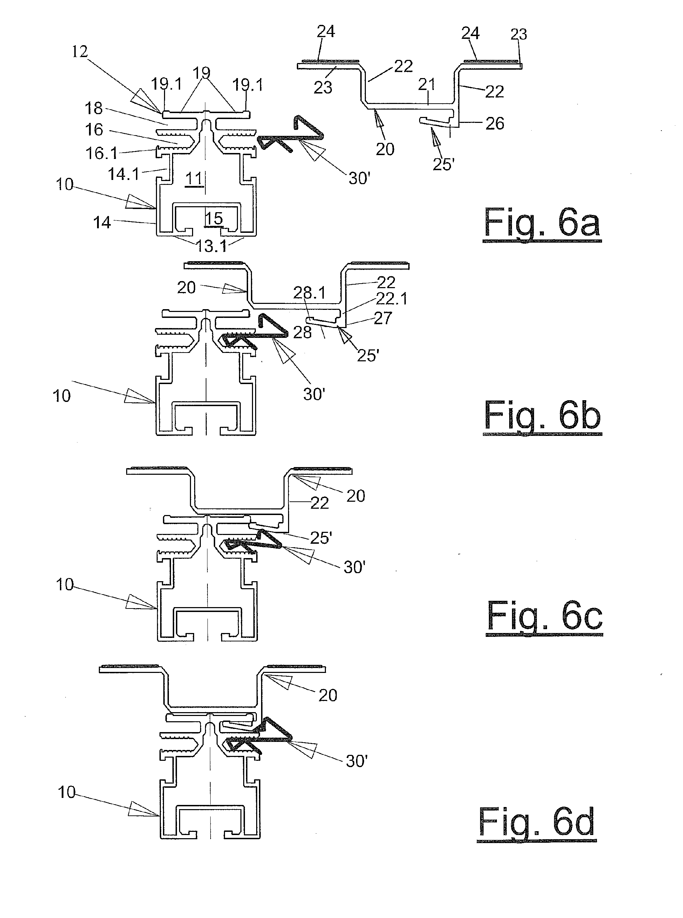

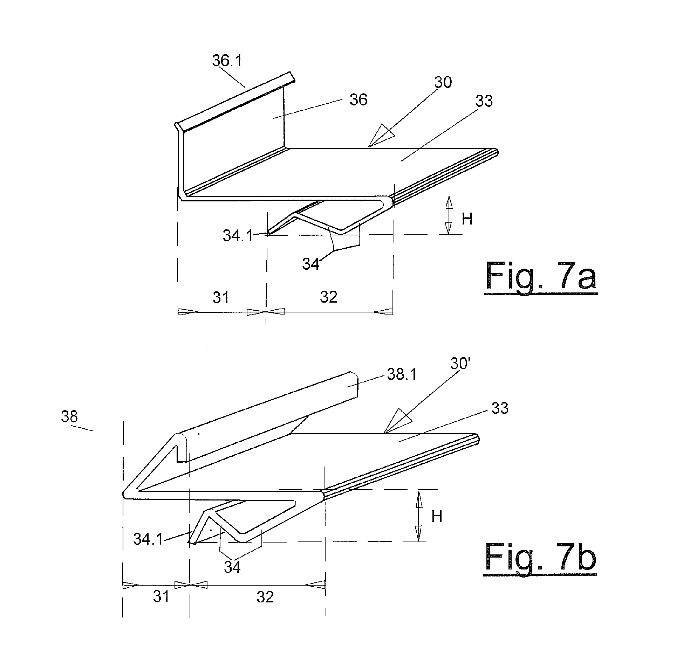

Bei der Feder 30 der ersten Ausführungsform (s. Fig. 7a) bildet das Ende des aus der Federtasche 16 austretenden äußeren Teils 32 der Feder 30 einen Umbug 36 mit einer Kante 36.1, die der eine mit dem Stegelement 25 sperrend zusammenwirkt. Dabei ist das zugeordnete Stegelement 25 so ausgebildet, dass die freie Kante 36.1 des Umbugs 36 beim Aufschieben des Gegenprofils 20 auf diese Schräge auftreffend in Art einer schiefen Ebene nieder gedrückt wird, wie in den Figuren 4a, 4b und 4c dargestellt. Die Feder 30' der zweiten Ausführungsform (s. Fig. 7b) weist einen als keilförmigen Bereich an die Federbasis 33 angeformten Umbug 38 auf. Die schräg liegende Fläche dieses Umbugs 38 wirkt auch hier mit dem Stegelement 25' zusammen. Hier ist das zugeordnete Stegelement 25' so ausgebildet, dass die freie Kante 28.1 der Schrägfläche 28 beim Aufschieben des Gegenprofils 20 auf die Schräge des Umbugs 38 der Feder 30' auftrifft und in Art einer schiefen Ebene nieder gedrückt wird, wie in den Figuren 6a, 6b und 6c dargestellt. Die beim Aufschieben niedergedrückte freie Kante 38.1 des Umbugs 38 der Feder 30 bzw. der niedergedrückte Sperrschenkel 38.1 des Umbugs 38 der Feder 30' springen bei Erreichen der Endlage des aufgeschobenen Gegenprofils 20 aufgrund ihrer Elastizität zurück und hintergreifen - wie in den Figuren 4d und 6d dargestellt - die Sperrfläche 27 des Stegelements 25 bzw. 25', so dass die Lage des Gegenprofils 20 gesichert ist.

Beim Aufschieben des Gegenprofils 10 auf das Unterprofil 10 werden sowohl die Federn 30 bzw. 30' in die Federtaschen 16 wie auch die Stegelemente 25 bzw. 25' in die zugeordneten Stegtaschen 18 gleichzeitig eingeführt. Dazu wird das Gegenprofil 20 an die Außenseite des Basisschenkels 21 an der Oberseite des Unterprofils 10 heran geführt bis die Außenseite des Basisschenkels 21 an der Schiebefläche 19 anschnäbelt und auf diese aufgeschoben der kann, wobei Auflagenocken 19.1 das Aufschieben erleichtern. Dabei versteht sich für ein Erreichen eines Formschlusses von selbst, dass die Abmessungen der Feder 30 bzw. 30' und der Federtaschen 16 ebenso aufeinander abgestimmt sind, wie die Abmessungen der Stegelemente 25 bzw. 25' und Stegtasche 18.

Zur Vorbereitung der Montage eine Photovoltaicanlage 1 auf einem Dach Ist zunächst die Unterkonstruktion 4 bzw. 4' auf der Dachfläche 3 bzw. 3' festzulegen. Auf dieses werden dann die Unterprofile 10 aufgesetzt. Die Gegenprofile 20 sind an den Unterseiten der Modulen 2 befestigt. Zum Aufsetzen der Module 2 werden diese dann mit den Gegenprofile 20 in entsprechende Position gegenüber den Unterprofile 10 gebracht, in die an den vorgesehen Stellen die Federn 30 bzw. 30' eingesetzt sind. Durch bloßes Aufschieben der Gegenprofils 20 auf die Unterprofile werden dann die Module 2 in ihre Endposition gebracht, in der diese unter der Wirkung der zurück gesprungenen Federn 30 bzw. 30' gesichert sind. Es versteht sich von selbst, dass eine solche Montage durch einfaches Ansetzen der Module 2 mit ihren Gegenprofilen 20 an die entsprechenden Unterprofile 10 sehr vereinfacht ist, da das Aufschieben diese Module 2 automatisch in eine gesicherte Endlage bringt. Somit wird in einfacher und schneller Weise die Anbringung eines Moduls 2 auf einer Unterkonstruktion 4 ermöglicht, ohne den Einsatz von Werkzeugen.

### Bezugszeichenliste:

- 01: Photovoltaic-Anordnung 1
- 02: Modul 2
- 03: Dachfläche 3
- 03': Dachfläche 3'
- 04: Unterkonstruktion 4
- 04': Unterkonstruktion 4'
- 05: Sparren bzw. Pfette 5
- 06.1: Schiene 6.1
- 06.2: Tragprofil 6.2, bzw. 30'
- 07: Stütze 7
- 07.1: Zwischenstück 7.1
- 08: Dachhaken 8
- 09.1: Profilhalter 9.1
- 09.2: Schraube 9.2
- 10: Unterprofil 10
- 11: Kastenprofil 11
- 12: Stegprofil 12
- 13.1: untere Wand 13.1, Wand 13.1
- 13.2: obere Wand 13.2
- 14: Seitenwand 14
- 14.1: U-förmige Nute 14.1, Nut 14.1
- 15: Nut 15
- 16: Federtasche 16, 16.1
- 16.1: (der Stegkammer zugewandte) Seite 16.1 der Federkammer
- 17: Sperrkante 17
- 18: Stegtasche 18
- 19: Schiebefläche 19
- 19.1: Auflagenocken 19.1
- 20: Gegenprofil 20
- 21: Basisschenkel 21
- 22: seitliche Schenkel, Seitenschenkel 22
- 22.1: 22.1
- 23: Verlängerungssteg Auflageschenkel 23
- 24: Haftflächen 24
- 25: Stegelement 25 bzw., 25'
- 25': Stegelement 25 bzw., 25'
- 26: Ausformung 26
- 26.1: keilförmige 26.1
- 27: Spitze 27, Sperrfläche 27
- 28: Sperrkante keilförmige Anformung 28, Schrägfläche 28
- 28.1: Nasenkante 28.1, freie Kante 28.1
- 30: Feder 30 erster Ausführungsform
- 30': Feder 30' zweiter Ausführungsform
- 31: äußeren Federbereich 31
- 32: inneren Federbereich 32
- 33: Federbasis 33, 33'
- 34: Zackenschenkel 34
- 34.1: Sperrschenkel 34.1
- 35:
- 36: Umbug 36
- 36.1: Sperrkante 36.1, Kante 36.1, freie Kante 36.1
- 38: Umbug 38, Umbug 38 als keilförmigen Bereich
- 38.1: Sperrschenkel 38.1

## Patentansprüche

1. Anordnung zur Befestigung von Modulen (2) einer Photovoltaik-Anlage oder von Solarpaneelen an einer auf einer Dachfläche (3, 3') befestigten Unterkonstruktion (4, 4'), an der ein Unterprofil (10) und an dem Modul (2) ein Gegenprofil (20) vorgesehen sind, die beide formschlüssig miteinander verbindbar sind, **dadurch gekennzeichnet, dass** die Formschlussverbindung zur Halterung des Moduls (2) an der Unterkonstruktion (4, 4') ein am Gegenprofil (20) vorgesehenes Stegelements (25; 25') aufweist, das in eine Stegtasche (18) am Unterprofil (10) und diese zumindest höhenmäßig mit Formschluss füllend einführbar und in dieser Verbindung mittels einer in eine Federtaschen (16) am Unterprofil (10) mit einem inneren Federbereich (31) einführbare Feder (30; 30') als Sperrmittel an der Unterkonstruktion (4) anklipsbar ist, wobei Federtasche (16) und Stegtasche (18) parallel zueinander und im Abstand voneinander und vorzugsweise beidseits angeordnet sind.

2. Anordnung nach Anspruche 1, **dadurch gekennzeichnet, dass** das Unterprofil (10) als Kastenprofil (11) ausgebildet ist, an dessen oberer Wand (13.2) ein Stegelement (12) mit übereinander liegenden Feder- bzw. Stegtaschen (16, 18) in Form von U-förmigen Nuten aufweist, wobei jeweils an den Seitenwänden (14) und an der unteren Wand (13.1) des Kastenprofils (11) U-förmige Einformungen (14.1, 15) vorgesehen sind, zur Festlegung des Unterprofils (10) mit Profilhalter oder Schrauben (9.1; 9.2) an der auf dem Dach angeordneten Unterkonstruktion (4; 4'), und dass das Gegenprofil (20) Hut-Form aufweist, dessen von dem Basisschenkel (21) etwa rechtwinklig ausgehende Seitenschenkel (22) zur Bildung von mit der Unterseite des Moduls (2) zusammenwirkenden Anlageschenkel (23) um 90° aufgebogen sind, wobei die Außenseiten der Anlageschenkel (23) die mit der Unterseite des Moduls (2) zusammenwirken.

3. Anordnung nach Anspruch 1 oder 2, **dadurch gekennzeichnet, dass** die Feder (30; 30') eine Federbasis (33) aufweist, deren eines Ende zu einem in Wesentlichen den inneren Federteil (31) bildenden Zackenschenkel (34) zurückgebogen ist, dessen Ende (34.1) als innerer Federteil (32) sich bei in die Federtaschen (16) eingesetzten Feder (30, 30') gegen ein die Federtasche (16) abschließende Sperrkante (17) abstützend anlegt.

4. Anordnung nach Anspruch 3, **dadurch gekennzeichnet, dass** der Zackenschenkel (34) als in die Federtasche (16) einführbarer innerer Federteil (32) der Feder (20; 30'), dessen Höhe "H" so ausgebildet ist, dass die Stegbasis (33) gegen die der Stegkammer (18) zugewandten Wandung (16.1) der Federkammer angedrückt ist.

5. Anordnung nach Anspruch 3 oder 4, **dadurch gekennzeichnet, dass** der in der Federtasche (16) liegende innere Federbereich (31) mit an den Wänden der Federtasche (16) angeordneten Riefen zur Sicherung der Halterung der in die Federtasche (16) eingeschobenen Feder (30; 30') zusammenwirken.

6. Anordnung nach einem der Ansprüche 1 bis 5, **dadurch gekennzeichnet, dass** das Unterprofil (10) als Kastenprofil (11) ausgebildet ist, an dessen oberer Wand (13) die übereinander liegenden Feder- bzw. Stegtaschen (16, 18) in Form von U-förmigen Nuten angeformt sind, wobei jeweils an den Seitenwänden (14) und an der unteren Wand (12) des Kastenprofils (11) U-förmige Einformungen (15) vorgesehen sind, zur Festlegung des Unterprofils (10) an einer auf dem Dach oder der Unterkonstruktion (4; 4') festlegbare Halterung wie Profilhalter (9.1) oder Schrauben (9.2).

7. Anordnung nach einem der Anspruch 1 bis 6, **dadurch gekennzeichnet dass,** die Weite der Stegtasche (18) zum Erreichen des Formschlusses der Höhenerstreckung des Stegelements (25; 25') und die Weite der Federtasche (16) zum Erreichen des Anliegens der Federbasis (33) an der der Stegkammer (18) zugewandten Wandung (16.1) der Federkammer (16) anliegt, während das freie Ende des Zackenschenkels (34) als Sperrkante (34.1) gegen die die Federkammer abschließende Sperrkante (17) abgestützt ist.

8. Anordnung nach einem der Ansprüche 1 bis 7, **dadurch gekennzeichnet, dass** das an das Gegenprofil (20) angeformte Stegelement (25) der ersten Ausführungsform eine unter einem spitzen Winkel zum inneren Federteil (31) gerichtete, keilförmige Ausformung (26) aufweist, die V-förmig zu einer Spitze (26.1) umgebogen in ein freies Ende übergeht, das eine Sperrkante oder Sperrfläche (27) bildet, wobei die Spitze (26.1) beim Einsetzen des Gegenprofils (20) mit Stegelement (25) mit dem Umbug (36) der Feder (30) zusammenwirkend diese niederdrückend so spannt, dass der Umbug (36) bei aufgeschobenen Gegenprofil (2) die Sperrkanten (27) des Stegelements (25) hintergeifend zurückspringt.

9. Anordnung nach einem der Ansprüche 1 bis 7, **dadurch gekennzeichnet, dass** das an das Gegenprofil (20) angeformte Stegelement (25') der zweiten Ausführungsform an eine Verlängerung (22.1) einer Seitenwand (22) des Gegenprofils (20) unter einem spitzen Winkel zum inneren Federteil (31) gerichtete keilförmig liegende Schrägfläche (28) aufweist, deren freie Kante Nasenkante 28.1 bildet, wobei diese Spitze beim Einsetzen des Gegenprofils (20) mit Stegelement (25) mit dem Umbug (38) der Feder (30') zusammenwirkend diese niederdrückt und so spannt, dass der Umbug (38) bei aufgeschobenen Gegenprofil (2) die von der Verlängerung des Seitenwand (22) gebildete Sperrkanten (27) des Stegelements (25) hintergeifend zurückspringt.
